# FASCICULE DE BREVET EUROPEEN

(11) **EP 0 756 962 B1**
(45) Date de publication et mention de la délivrance du brevet: **04.11.1998**
(21) Numéro de dépôt: 96401459.1
(22) Date de dépôt: 02.07.1996
(51) Int. Cl.: B60N 2/22, B60N 2/42, B60N 2/44, B60R 22/26, B60R 22/28

(54) **Armature de dossier pour siège de véhicule**
Rückenlehnerahmen für Fahrzeugsitz
Backrest frame for vehicle seat

(30) Priorité: 03.07.1995 FR 9507992
(43) Date de publication de la demande: 05.02.1997
(73) Titulaire: BERTRAND FAURE EQUIPEMENTS S.A., 92100 Boulogne (FR)
(72) Inventeur: Aufrere, Christophe, 91460 Marcoussis (FR); Hamelin, Bruno, 77380 Combs la Ville (FR)
(74) Mandataire: Burbaud, Eric

(56) Documents cités:
- EP-A- 0 353 210
- DE-C- 3 706 394
- FR-A- 2 714 340
- US-A- 4 626 028
- PATENT ABSTRACTS OF JAPAN vol. 009, no. 268 (M-424), 25 Octobre 1985 & JP-A-60 113742 (TACHIKAWA SPRING KK), 20 Juin 1985,
- PATENT ABSTRACTS OF JAPAN vol. 009, no. 297 (M-432), 25 Novembre 1985 & JP-A-60 135339 (TACHIKAWA SPRING KK), 18 Juillet 1985,

## Description

La présente invention est relative aux armatures de dossiers pour sièges de véhicules, et aux sièges de véhicules comportant de telles armatures de dossier.

Plus particulièrement, l'invention concerne une armature de dossier pour siège de véhicules, présentant une portion supérieure en liaison mécanique avec une ceinture de sécurité et comportant un bâti supérieur monté sur un bâti inférieur, le bâti inférieur présentant au moins des premier et deuxième montants latéraux sensiblement verticaux, ledit bâti supérieur comportant une superstructure (voir, par exemple, FR-A-2 714 340, correspondant au préambule de la première revendication indépendante). La liaison mécanique en question peut éventuellement consister en une fixation directe d'une extrémité de la ceinture de sécurité sur le dossier, mais elle consiste plus couramment en une liaison coulissante permettant, lors de l'utilisation normale du véhicule, un coulissement libre de la ceinture de sécurité, dont l'extrémité est enroulée sur un enrouleur de ceinture.

Un siège équipé d'une telle armature de dossier est en général appelé "siège à ceinture embarquée".

Lorsqu'un véhicule dans lequel est installé un tel siège subit un choc avant violent, la ceinture de sécurité applique un effort important sur le torse de l'utilisateur du siège, à tel point que la ceinture de sécurité risque de blesser cet utilisateur.

Ce phénomène existe bien entendu aussi lorsque la ceinture de sécurité n'est pas "embarquée" sur le siège, mais est fixée à la caisse du véhicule.

Mais dans ce cas, il est connu de remédier à ce phénomène en fixant un des points d'attache de la ceinture de sécurité à une tôle déchirable, comme décrit par exemple dans un article de la revue "Le Journal de l'Automobile" (n^{o} 483/484 du 28/04/95, page 8). Ainsi, lorsque le véhicule subit un choc avant violent, la tôle se déchire progressivement sous l'effort de traction de la ceinture de sécurité, en permettant au point d'attache de la ceinture de se déplacer sur une certaine longueur, qui peut atteindre par exemple 30 cm. De cette façon, on freine progressivement le mouvement du torse de l'utilisateur vers l'avant, et par conséquent, on limite les efforts exercés par la ceinture de sécurité sur le torse de l'utilisateur. On évite donc de blesser cet utilisateur.

Lorsque la ceinture de sécurité est "embarquée" sur le siège, cette solution technique n'est pas envisageable. En effet, l'espace libre à l'intérieur d'un siège est trop limité pour permettre qu'un des points d'attache de la ceinture de sécurité, incorporé dans le siège, puisse subir un déplacement linéaire important, par exemple de l'ordre de 30 cm.

La présente invention a donc pour but de proposer une armature de dossier pour siège de véhicule du type à ceinture "embarquée" qui permette de limiter les efforts appliqués par la ceinture de sécurité sur le torse de l'utilisateur du siège, en cas d'accident.

A cet effet, selon l'invention, une armature de dossier du genre en question, tel que défini dans le préambule de la revendication indépendante 1, est caractérisée en ce que le bâti supérieur comporte en outre une barre de torsion horizontale qui s'étend longitudinalement entre des première et deuxième extrémités montées respectivement sur les premier et deuxième montants latéraux du bâti inférieur, ladite superstructure étant disposée au-dessus de la barre de torsion et étant solidaire au moins de la deuxième extrémité de la barre de torsion, la première extrémité de la barre de torsion étant immobilisée en rotation par rapport au premier montant du bâti inférieur et la deuxième extrémité de la barre de torsion tourillonnant librement par rapport au deuxième montant du bâti inférieur, la superstructure du bâti supérieur comportant une partie située du côté du deuxième montant du bâti inférieur, la ceinture de sécurité étant en liaison mécanique avec cette partie de la superstructure et appliquant un couple de rotation à ladite partie de la superstructure lorsque ladite ceinture de sécurité subit un effort de traction, la barre de torsion et la superstructure étant dimensionnées pour se déformer plastiquement lorsque la ceinture de sécurité subit une traction supérieure à une valeur prédéterminée, et le bâti supérieur exerçant alors sur la ceinture de sécurité un effort résistant inférieur à 3 500 N.

Ainsi, en cas de choc avant violent subi par le véhicule, du fait que la barre de torsion et la superstructure se déforment plastiquement, le torse de l'utilisateur du siège est freiné progressivement. De cette façon, on limite l'effort appliqué par la ceinture sur le torse de l'utilisateur du siège à une valeur telle que cet utilisateur ne risque pas d'être blessé.

Dans des modes de réalisation préférés, on a recours en outre à l'une et/ou à l'autre des dispositions suivantes:
- la ceinture de sécurité est au moins partiellement enroulée sur un enrouleur de ceinture ;
- la barre de torsion du bâti supérieur présente une section tubulaire, ce qui lui permet d'être à la fois légère et résistante en torsion ;
- la superstructure du bâti supérieur comporte un arceau présentant une traverse supérieure et deux branches latérales qui s'étendent vers le bas à partir de la traverse supérieure, jusqu'à des extrémités inférieures solidaires respectivement des deux extrémités de la barre de torsion ;
- la première extrémité de la barre de torsion est fixée rigidement de façon permanente au premier montant du bâti inférieur ;
- le bâti inférieur s'étend jusqu'à une extrémité supérieure et la superstructure du bâti supérieur s'étend vers le haut au-delà de cette extrémité supérieure, ladite superstructure s'étendant horizontalement sur sensiblement toute la largeur de l'armature de dossier, et la première extrémité de la barre de torsion étant immobilisée en rotation par rapport au premier montant du bâti inférieur par l'intermédiaire d'un mécanisme d'articulation pour régler l'inclinaison du bâti supérieur par rapport au bâti inférieur : ce montage particulier du bâti supérieur sur le bâti inférieur permet alors non seulement d'assurer une meilleure sécurité mais encore d'obtenir un meilleur confort en autorisant un réglage d'inclinaison de la partie supérieure du dossier.

Par ailleurs, l'invention a également pour objet un siège de véhicule comportant un dossier muni d'une armature de dossier telle que définie ci-dessus, la ceinture de sécurité de ce siège présentant plusieurs points d'attache et tous les points d'attache de ladite ceinture étant fixés au siège.

D'autres caractéristiques et avantages de l'invention apparaîtront au cours de la description détaillée suivante de deux de ses formes de réalisation, données à titre d'exemples non limitatifs, en regard des dessins joints.

Sur les dessins :
- la figure 1 est une vue schématique d'un siège de véhicule comportant une armature de dossier selon une forme de réalisation de l'invention,
- la figure 2 est une vue en perspective de l'armature du siège de la figure 1,
- la figure 3 est une vue en coupe de la barre de torsion appartenant au bâti supérieur de l'armature de dossier du siège représenté sur la figure 1,
- la figure 4 est un graphe représentant l'effort résistant du bâti supérieur de l'armature de dossier selon l'invention, en fonction de la déformation de ce bâti supérieur,
- et la figure 5 est une vue similaire à la figure 3, pour une autre forme de réalisation de l'invention, comportant un réglage de l'inclinaison du haut de dossier.

Sur les différentes figures, les mêmes références désignent des éléments identiques ou similaires.

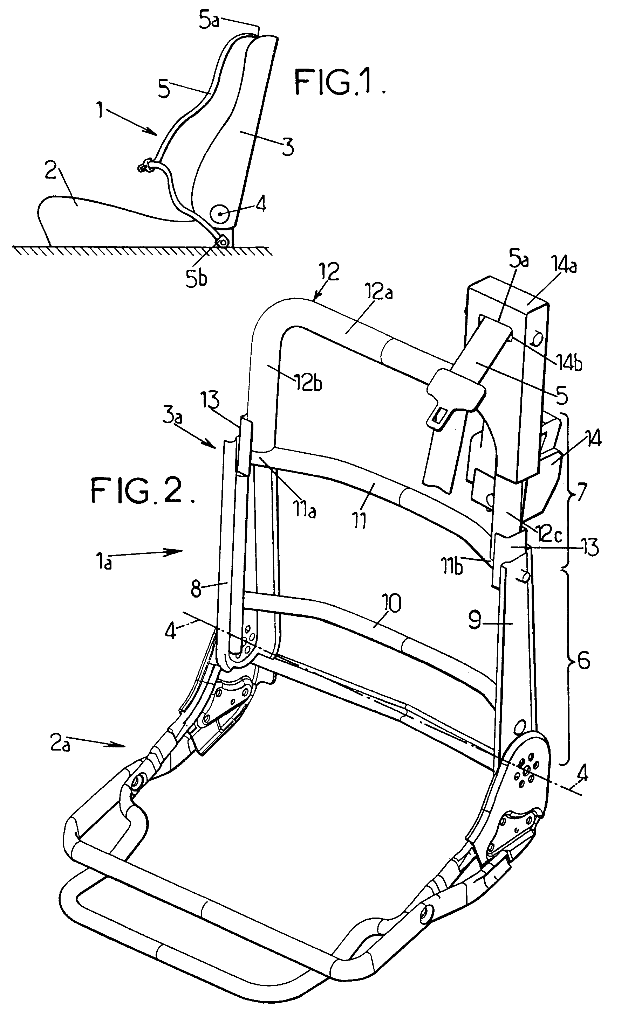

La figure 1 représente un siège avant de véhicule automobile 1 comportant une armature de dossier selon l'invention. Ce siège comporte d'une part une assise 2 qui est montée sur le plancher du véhicule, en général par l'intermédiaire de glissières, et d'autre part un dossier 3 qui est en général monté pivotant sur l'assise 2, autour d'un axe de rotation 4.

Le siège 1 comporte une ceinture de sécurité 5 dite "embarquées, c'est-à-dire dont les trois points d'attache sont fixés au siège lui-même. Sur la figure 1, seuls sont visibles le point d'attache supérieur 5a et le point d'attache inférieur 5b qui est en permanence lié à la ceinture. Le troisième point d'attache, qui permet de boucler la ceinture, est situé sur le côté du siège qui n'est pas visible sur la figure 1.

Le point d'attache supérieur 5a est un point de passage de la ceinture de sécurité, qui est enroulée sur un enrouleur de ceinture situé à l'intérieur du siège 1.

Comme représenté sur la figure 2, le siège comporte une armature métallique 1a, généralement réalisée en acier. Cette armature se compose d'une armature d'assise 2a et d'une armature de dossier 3a qui est montée pivotante sur l'armature d'assise 2a autour de l'axe 4 susmentionné.

L'armature de dossier 3 est elle-même subdivisée en un bâti inférieur 6 et un bâti supérieur 7.

Le bâti inférieur 6 comporte des premier et deuxième montants latéraux sensiblement verticaux 8 et 9 qui tourillonnent autour de l'axe 4 à leurs extrémités inférieures et qui sont reliés l'un à l'autre par une traverse 10.

Le bâti supérieur 7, quant à lui, se compose d'une barre de torsion 11 et d'un arceau 12 disposé au-dessus de la barre de torsion, ces deux pièces présentant chacune une section tubulaire.

La barre de torsion 11 s'étend sensiblement horizontalement entre des première et deuxième extrémités axiales 11a et 11b qui sont voisines respectivement des extrémités supérieures des premier et deuxième montants latéraux 8 et 9 du bâti inférieur.

Par ailleurs, l'arceau 12 est formé de préférence mais non obligatoirement, en un seul tronçon de tube coudé qui présente une traverse horizontale supérieure 12a et deux branches latérales 12b et 12c. Les deux branches 12b et 12c s'étendent vers le bas à partir de la traverse 12a, jusqu'à des extrémités inférieures qui sont solidaires respectivement des extrémités axiales 11a et 11b de la barre de torsion.

La solidarisation entre les extrémités inférieures des branches latérales 12b et 12c de l'arceau avec les extrémités axiales 11a et 11b de la barre de torsion peut être réalisée par tous moyens. Cette solidarisation peut être réalisée par exemple grâce à des tronçons 13 de profilé métallique en U qui sont soudés à la fois sur les branches latérales 12b et 12c et sur les extrémités axiales 11a et 11b de la barre de torsion.

Par ailleurs, un dispositif enrouleur de ceinture 14, logé dans le dossier 3, est prévu pour enrouler la ceinture 5 et est fixé à l'arceau 12 du côté du deuxième montant latéral 9 du bâti inférieur. Ce dispositif enrouleur 14 est du type permettant un blocage de la ceinture en cas de traction brusque sur la ceinture, comme cela est bien connu dans l'état de la technique.

Dans l'exemple représenté, le bâti supérieur 7 comporte en outre un boîtier rigide 14a qui est solidaire de l'arceau 12 et qui s'étend vers le haut au-delà de la traverse 12a, au-dessus de l'enrouleur 14. Ce boîtier 14a comporte une fente horizontale 14b vers l'avant pour recevoir la ceinture 5, et il inclut une poulie de renvoi (non représentée) sur laquelle passe la ceinture 5 avant de rejoindre l'enrouleur 14. La face arrière du boîtier 14a est au moins partiellement ouverte pour permettre le passage de la ceinture de sécurité vers l'enrouleur 14.

Le "point d'attache" supérieur 5a susmentionné de la ceinture de sécurité est donc constitué par le boîtier 14a.

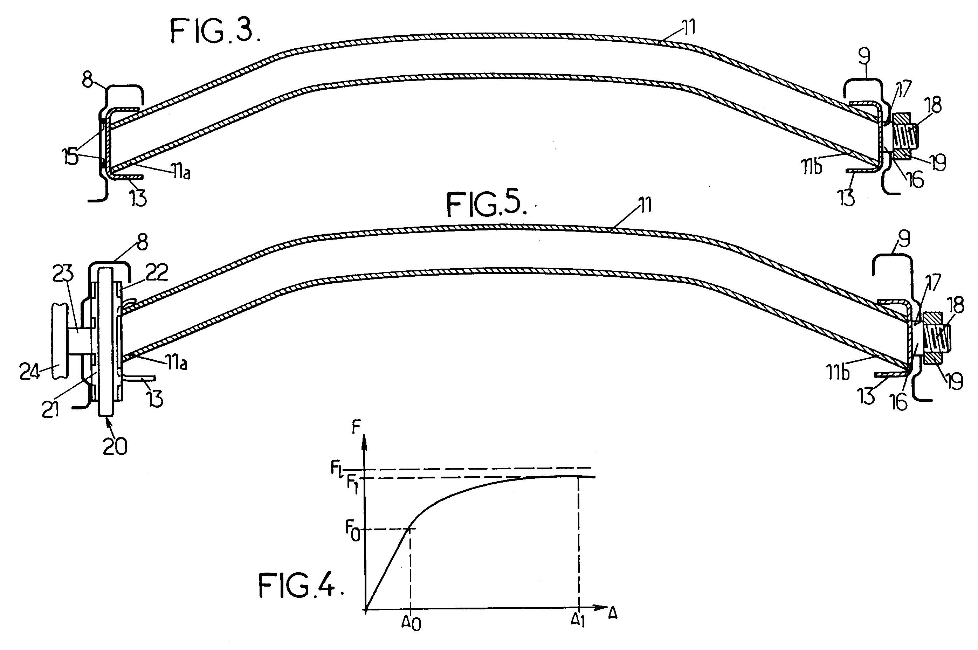

Comme représenté sur la figure 3, la première extrémité 11a de la barre de torsion 11 est solidarisée avec le premier montant latéral 8 du bâti inférieur. Dans l'exemple représenté, qui n'est pas limitatif, cette solidarisation est réalisée grâce à des soudures 15 entre le premier montant latéral 8 et le profilé 13 correspondant à la première extrémité 11a de la barre de torsion. Eventuellement, la première extrémité 11a de la barre de torsion pourrait traverser le profilé 13 correspondant pour être soudée directement au premier montant latéral 8.

Par ailleurs, la deuxième extrémité 11b de la barre de torsion est montée librement pivotante à l'extrémité supérieure du deuxième montant latéral 9 du bâti inférieur.

Pour cela, dans l'exemple représenté, le profilé 13 qui est fixé à la deuxième extrémité 11b de la barre de torsion est solidaire d'un pivot 16 qui traverse une ouverture circulaire 17 ménagée dans le deuxième montant latéral 9. Le pivot 16 peut également être fixé directement à la deuxième extrémité 11b de la barre de torsion, et traverser le profilé 13. Ce pivot 16 se prolonge vers l'extérieur du siège par une tige filetée 18 qui reçoit un écrou 19. L'écrou 19 ne serre pas le deuxième montant 9, de sorte que le pivot 16 peut librement tourner dans l'ouverture circulaire 17, tout en solidarisant axialement la barre de torsion 11 avec le deuxième montant latéral 9.

Grâce à ces dispositions, lorsque la ceinture de sécurité 5 subit un effort de traction, elle exerce un effort de torsion sur la barre de torsion 11 et un effort de flexion et de torsion sur l'arceau 12.

Tant que l'effort de traction subi par la ceinture 5 ne dépasse pas un seuil prédéterminé F0, le bâti supérieur 7 reste sensiblement indéformable : autrement dit, comme représenté sur la figure 4, le déplacement A0 que subit alors le point d'attache supérieur 5a de la ceinture est négligeable et le bâti supérieur ne subit que de faibles déformations élastiques.

Par contre, lorsque cet effort de traction dépasse le seuil F0, il entraîne une déformation plastique en torsion de la barre de torsion 11 et une déformation plastique en torsion et en flexion du l'arceau 12.

Le seuil F0 peut être par exemple de l'ordre de 2 500 N.

Du fait des déformations plastiques susmentionnées, le point d'attache supérieur 5a de la ceinture de sécurité subit un déplacement linéaire A. Comme représenté sur la figure 4, la barre de torsion 11 et l'arceau 12 sont dimensionnés pour qu'au cours de ce déplacement linéaire A, et notamment pour une valeur prédéterminée A1 de ce déplacement linéaire, l'effort résistant F1 appliqué par le bâti supérieur 7 sur la ceinture de sécurité 5 se situe toujours à un niveau inférieur à une force prédéterminée F*1* suffisamment faible pour que l'utilisateur du siège ne soit pas blessé par la ceinture de sécurité.

Le déplacement prédéterminé A1 peut valoir par exemple 300 mm, bien que cette valeur ne soit en aucune façon limitative, et la force F*1* peut par exemple valoir 3 500 N.

Dans la forme de réalisation représentée sur la figure 5, l'armature de dossier 2a se distingue de la forme de réalisation déjà décrite uniquement par le fait que la première extrémité 11a de la barre de torsion est immobilisée en rotation par rapport au premier montant latéral 8 du bâti inférieur par l'intermédiaire d'un mécanisme d'articulation 20, bien connu dans l'état de la technique.

Un exemple d'un tel mécanisme d'articulation 20 est donné par exemple dans le document EP-A-0 505 229, cet exemple n'étant bien entendu en aucune façon limitatif.

Dans l'exemple considéré, le mécanisme d'articulation 20 comporte :
- un flasque fixe 21 solidarisé avec le premier montant latéral 8 du bâti inférieur,
- un flasque mobile 22 solidarisé avec la première extrémité 11a de la barre de torsion, cette solidarisation étant réalisée dans l'exemple considéré au moyen d'un des deux profilés 13 déjà décrits,
- et un arbre rotatif de commande 23 entraîné par une poignée de commande 24 ou éventuellement entraîné par un moteur électrique (non représenté), le flasque mobile 22 étant entraîné en rotation par l'arbre de commande 23 par l'intermédiaire d'un train d'engrenage hypocycloïdal.

En variante, le mécanisme 20 peut ne pas comporter de train d'engrenage. Dans ce cas, l'arbre de commande 23 peut seulement bloquer ou débloquer le flasque mobile 22, et cet arbre de commande est toujours entraîné manuellement par une poignée.

L'axe de rotation du flasque mobile 22 est aligné avec l'axe de rotation du pivot 16 solidaire de la deuxième extrémité 11b de la barre de torsion, de sorte qu'en faisant tourner la poignée de commande 24, on fait pivoter l'ensemble du bâti supérieur 7 de l'armature de dossier, en réglant ainsi l'inclinaison du haut du dossier par rapport au bas du dossier du siège.

Une fois ce réglage effectué, la première extrémité 11a de la barre de torsion est immobilisée en rotation par le mécanisme d'articulation 20, qui est du type "irréversible", c'est-à-dire qu'il transmet les couples de rotation de l'arbre de commande 23 au flasque mobile 22, mais non l'inverse, comme cela est bien connu dans l'état de la technique.

Par conséquent, une fois que l'inclinaison du bâti supérieur 7 a été réglé au moyen du mécanisme d'articulation 20, le fonctionnement de l'armature de dossier est le même que dans la forme de réalisation représentée sur les figures 1 à 3.

## Revendications

1. Armature de dossier pour siège de véhicule, cette armature présentant une portion supérieure en liaison mécanique avec une ceinture de sécurité (5) et comportant un bâti supérieur (7) monté sur un bâti inférieur (6), le bâti inférieur (6) présentant au moins des premier et deuxième montants latéraux (8, 9) sensiblement verticaux, ledit bâti supérieur (7) comportant une superstructure (12, 14a), **caractérisée en ce** que le bâti supérieur (7) comporte en outre une barre de torsion (11) horizontale qui s'étend longitudinalement entre des première et deuxième extrémités (11a, 11b) montées respectivement sur les premier et deuxième montants latéraux du bâti inférieur, ladite superstructure (12, 14a) étant disposée au-dessus de la barre de torsion et étant solidaire au moins de la deuxième extrémité (11b) de la barre de torsion, la première extrémité (11a) de la barre de torsion étant immobilisée en rotation par rapport au premier montant (8) du bâti inférieur et la deuxième extrémité (11b) de la barre de torsion tourillonnant librement par rapport au deuxième montant (9) du bâti inférieur, la superstructure (12, 14a) du bâti supérieur comportant une partie située du côté du deuxième montant (9) du bâti inférieur, la ceinture de sécurité (5) étant en liaison mécanique avec cette partie de la superstructure et appliquant un couple de rotation à ladite partie de la superstructure lorsque ladite ceinture de sécurité subit un effort de traction, la barre de torsion (11) et la superstructure (12) étant dimensionnées pour se déformer plastiquement lorsque la ceinture de sécurité (5) subit un effort de traction supérieur à une valeur prédéterminée (F0), et le bâti supérieur (7) exerçant alors sur la ceinture de sécurité un effort résistant inférieur à 3 500 N.

2. Armature de dossier selon la revendication 1, dans laquelle la ceinture de sécurité (5) est au moins partiellement enroulée sur un enrouleur de ceinture (14).

3. Armature de dossier selon l'une quelconque des revendications 1 et 2, dans laquelle la barre de torsion (11) du bâti supérieur présente une section tubulaire.

4. Armature de dossier selon l'une quelconque des revendications précédentes, dans laquelle la superstructure du bâti supérieur comporte un arceau présentant une traverse supérieure (12a) et deux branches latérales (12b, 12c) qui s'étendent vers le bas à partir de la traverse supérieure, jusqu'à des extrémités inférieures solidaires respectivement des deux extrémités (11a, 11b) de la barre de torsion.

5. Armature de dossier selon l'une quelconque des revendications précédentes, dans laquelle la première extrémité (11a) de la barre de torsion est fixée rigidement de façon permanente au premier montant (8) du bâti inférieur.

6. Armature de dossier selon l'une quelconque des revendications 1 à 4, dans laquelle le bâti inférieur (6) s'étend jusqu'à une extrémité supérieure et la superstructure (12, 14a) du bâti supérieur s'étend vers le haut au-delà de cette extrémité supérieure, ladite superstructure s'étendant horizontalement sur sensiblement toute la largeur de l'armature de dossier, et la première extrémité (11a) de la barre de torsion étant immobilisée en rotation par rapport au premier montant (8) du bâti inférieur par l'intermédiaire d'un mécanisme d'articulation (20) pour régler l'inclinaison du bâti supérieur (7) par rapport au bâti inférieur (6).

7. Siège de véhicule comportant un dossier (3) muni d'une armature de dossier (3a) selon l'une quelconque des revendications précédentes, la ceinture de sécurité (5) de ce siège présentant plusieurs points d'attache (5a, 5b) et tous les points d'attache de ladite ceinture étant fixés au siège.

## Claims

1. A seatback frame for a vehicle seat, said frame having an upper portion mechanically connected with a seat belt (5) and comprising an upper structure (7) mounted on a lower structure (6), the lower structure (6) having at least first and second substantially vertical side uprights (8, 9), said upper structure (7) comprising a superstructure (12, 14a), characterized in that the upper structure (7) further comprises a horizontal torsion bar (11) extending longitudinally between first and second ends (11a, 11b) respectively mounted on the first and second side uprights of the lower structure, said superstructure (12, 14a) being disposed above the torsion bar and being secured at least to the second end (11b) of the torsion bar, the first end (11a) of the torsion bar being prevented from rotating relative to the first upright (8) of the lower structure, and the second end (11b) of the torsion bar pivoting freely relative to the second upright (9) of the lower structure, the superstructure (12, 14a) of the upper structure comprising a portion situated adjacent to the second upright (9) of the lower structure, the seat belt (5) being mechanically connected with said portion of the superstructure and applying a rotary torque to said portion of the superstructure when said seat belt is itself subjected to a traction force, the torsion bar (11) and the superstructure (12) being dimensioned so as to deform plastically when the seat belt is subjected to a traction force exceeding a predetermined value (F0), and the upper structure (7) then exerting a resistive force on the seat belt of less than 3,500 N.

2. A seatback frame according to claim 1, in which the seat belt (5) is wound, at least in part, on a belt winder (14).

3. A seatback frame according to claim 1 or 2, in which the torsion bar (11) of the upper structure is tubular in section.

4. A seatback frame according to any preceding claim, in which the superstructure of the upper structure comprises an arch having a top cross-member (12a) and two side branches (12b, 12c) which extend downwards from the top cross-member, to bottom ends which are secured to the two respective ends (11a, 11b) of the torsion bar.

5. A seatback frame according to any preceding claim, in which the first end (11a) of the torsion bar is rigidly fixed in permanent manner to the first upright (8) of the lower structure.

6. A seatback frame according to any one of claims 1 to 4, in which the lower structure (6) extends to a top end and the superstructure (12, 14a) of the upper structure extends upwards beyond said top end, said superstructure extending horizontally over substantially the entire width of the seatback frame, and the first end (11a) of the torsion bar being prevented from rotating relative to the first upright (8) of the lower structure by means of a hinge mechanism (20) for adjusting the inclination of the upper structure (7) relative to the lower structure (6).

7. A vehicle seat including a seat back (3) provided with a seatback frame (3a) according to any preceding claim, the seat belt (5) of the seat having a plurality of anchor points (5a, 5b) with all of the anchor points of said belt being secured to the seat.

## Patentansprüche

1. Rahmen einer Rückenlehne eines Fahrzeugs, wobei dieser Rahmen einen mit einem Sicherheitsgurt (5) in mechanischer Verbindung stehenden oberen Bereich und ein oberes Gestell (7) aufweist, das auf einem unteren Gestell (6) montiert ist, wobei das untere Gestell (6) mindestens erste und zweite im wesentlichen vertikale Seitenstützen (8, 9) aufweist, wobei das obere Gestell (7) einen Überbau (12, 14a) aufweist,
dadurch gekennzeichnet, daß
das obere Gestell (7) eine horizontale Torsionsstange (11) aufweist, die sich längs zwischen den ersten und zweiten Enden (11a, 11b) erstreckt, die jeweils auf den ersten und zweiten Seitenstützen des unteren Gestells montiert sind, wobei der Überbau (12, 14a) über der Torsionsstange angeordnet ist und mindestens mit dem zweiten Ende (11b) der Torsionsstange verbunden ist, wobei das erste Ende (11a) der Torsionsstange bezogen auf die erste Stütze (8) des unteren Gestells nicht drehbar ist und das zweite Ende (11b) der Torsionsstange bezogen auf die zweite Stütze (9) des unteren Gestells frei drehbar ist, wobei der Überbau (12, 14a) des oberen Gestells ein Teil umfaßt, das an die Seite der zweiten Stütze (9) des unteren Gestells angebracht ist, wobei der Sicherheitsgurt (5) in mechanischer Verbindung mit diesem Teil des Überbaus steht und ein Drehmoment auf diesen Teil des Überbaus wirkt, wenn der Sicherheitsgurt eine Zugkraft erfährt, wobei die Torsionsstange (11) und der Überbau (12) ausgelegt sind, um sich plastisch zu verformen, wenn der Sicherheitsgurt (5) eine Zugkraft erfährt, die größer als ein vorher bestimmter Wert (F0) ist, und der Überbau (7) einer Kraft standhält, die kleiner ist als 3 500 N und auf den Sicherheitsgurt ausgeübt wird.

2. Rahmen der Rückenlehne nach Anspruch 1, dadurch gekennzeichnet, daß mindestens ein Teil des Sicherheitsgurts (5) auf einen Gurtwickler (14) aufgerollt ist.

3. Rahmen der Rückenlehne nach einem der Ansprüche 1 oder 2, dadurch gekennzeichnet, daß die Torsionsstange (11) des oberen Gestells einen rohrförmigen Abschnitt aufweist.

4. Rahmen der Rückenlehne nach einem der vorhergehenden Ansprüche, dadurch gekennzeichnet, daß dar Überbau des oberen Gestells einen Bogen aufweist, der einen oberen Träger (12a) und zwei Seitenbügel (12b, 12c) aufweist, die sich von dem oberen Träger aus nach unten erstrecken, bis zu unteren Enden, die jeweils mit den zwei Enden (11a, 11b) der Torsionsstange verbunden sind.

5. Rahmen der Rückenlehne nach einem der vorhergehenden Ansprüche, dadurch gekennzeichnet, daß das erste Ende (11a) der Torsionsstange dauerhaft an der ersten Stütze (8) des unteren Gestells starr befestigt ist.

6. Rahmen der Rückenlehne nach einem der Ansprüche 1 bis 4, dadurch gekennzeichnet, daß das untere Gestell (6) sich bis zu einem oberen Ende erstreckt und der Überbau (12, 14a) des oberen Gestells sich von diesem oberen Ende aus nach oben erstreckt, wobei der Oberbau sich horizontal im wesentlichen über die ganze Breite des Rahmens der Rückenlehne erstreckt, und das erste Ende (11a) der Torsionsstange bezogen auf die erste Stütze (8) des unteren Gestells über einen Gelenkmechanismus (20) drehfest ist, der die Neigung des Überbaus (7) bezogen auf das untere Gestell (6) einstellt.

7. Fahrzeugsitz mit einer Rückenlehne (3), die einen Rahmen der Rückenlehne (3a) nach einem der vorhergehenden Ansprüche umfaßt, dadurch gekennzeichnet, daß der Sicherheitsgurt (5) des Sitzes mehrere Verbindungspunkte (5a, 5b) aufweist und daß alle Verbindungspunkte des Gurtes am Sitz befestigt sind.
